# EUROPÄISCHE PATENTSCHRIFT

(11) **EP 2 089 784 B1**
(45) Veröffentlichungstag und Bekanntmachung des Hinweises auf die Patenterteilung: **10.11.2010**
(21) Anmeldenummer: 07803395.8
(22) Anmeldetag: 11.09.2007
(51) Int. Cl.: G05D 16/06

(54) **ELEKTROPNEUMATISCHER DRUCKWANDLER**
ELECTROPNEUMATIC PRESSURE TRANSDUCER
CONVERTISSEUR ÉLECTROPNEUMATIQUE DE PRESSION

(30) Priorität: 16.11.2006 DE 102006054040
(43) Veröffentlichungstag der Anmeldung: 19.08.2009
(73) Patentinhaber: Pierburg GmbH, 41460 Neuss (DE)
(72) Erfinder: MERTENS, Chantal, 50735 Köln (DE)
(74) Vertreter: Patentanwälte ter Smitten
(86) Internationale Anmeldenummer: PCT/EP2007/059510
(87) Internationale Veröffentlichungsnummer: WO 2008/058778

(56) Entgegenhaltungen:
- WO-A-2004/044932
- DE-A1- 4 205 565
- DE-A1- 19 755 956
- DE-C1- 4 110 003

## Beschreibung

Die Erfindung betrifft einen elektropneumatischen Druckwandler mit einer Ventileinrichtung, welche ein Doppelsitzventil mit einem ersten Ventilsitz zwischen einem Steuerdruckraum und einem Unterdruckanschluss und einem zweiten Ventilsitz zwischen einem Atmosphärendruckanschluss und dem Steuerraum aufweist, wobei je nach Stellung eines Tauchankers wahlweise eine Verbindung des Steuerdruckraumes zum Atmosphärendruckanschluss oder zum Unterdruckanschluss zur Erzeugung eines Mischdruckes im Steuerdruckraum herstellbar ist, wobei die Stellung des Tauchankers von einer auf den Tauchanker wirkenden elektromagnetischen Kraft eines elektromagnetischen Kreises und einer auf einer mit dem Tauchanker gekoppelten Membran wirkenden pneumatischen Kraft abhängig ist.

Der mittels eines solchen elektropneumatischen Druckwandlers im Steuerraum erzeugte Druck wird beispielsweise verwendet, um pneumatische Steller wie zum Beispiel U-Dosen zu betätigen, die wiederum zur Betätigung von Abgasrückführventilen, Abgasklappen oder dergleichen benutzt werden können.

Ein derartiger Druckwandler ist beispielsweise aus der DE 41 10 003 C1 und der WO 2004/044932 A bekannt. Das Doppelsitzventil des hierin beschriebenen Druckwandlers besteht aus einer durch eine Federkraft gegen die Ventilsitze belastete Ventilplatte, welche somit als Ventilverschlussglied dient. Der üblicherweise mittels Pulsweitenmodulation angesteuerte Elektromagnet sorgt bei Bestromung dafür, dass der Tauchanker mit dem zweiten Ventilsitz zwischen dem Atmosphärendruckanschluss und dem Steuerraum in Richtung des Elektromagneten gezogen wird, wodurch sich die Ventilplatte vom ersten Ventilsitz zwischen dem Steuerdruckraum und dem Unterdruckanschluss abhebt und der Unterdruck in den Steuerdruckraum gelangen kann. Hierdurch sinkt der Druck im Steuerdruckraum, so dass die Membrane in entgegengesetzter Richtung, also zum ersten Ventilsitz hin, belastet wird. Je nach Größe des im Steuerdruckraum vorliegenden Unterdruckes wird die resultierende Kraft aus dieser pneumatischen Kraft und der elektromagnetischen Kraft so groß, dass der Tauchanker und somit die Ventilplatte gegen den zweiten Ventilsitz anliegt, während der erste Ventilsitz weiter in Richtung vom Elektromagnet weg geschoben wird, wodurch eine Verbindung zum Atmosphärendruckanschluss hergestellt wird. Durch dieses getaktete Herauf- und Herunterschieben des Tauchankers stellt sich im Steuerdruckraum ein Mischdruck ein, welcher von der Größe des effektiven Stroms im elektromagnetischen Kreis abhängig ist. Bei diesem Druckwandler trat das Problem auf, dass bei Betrieb mit konstanter Frequenz, getakteter Gleichspannung und variablem Einschalt/Ausschalt-Dauerverhältnis die Ventileinrichtung Schwingneigung zeigte, wodurch der Luftverbrauch deutlich erhöht wurde, da beim Öffnen des zweiten Ventilsitzes Unterdruck aus dem Steuerdruckraum zum Atmosphärendruck entwich, ohne dass eine entsprechende Ansteuerung des Elektromagneten vorlag.

Um den Luftverbrauch zu reduzieren, wurde daher in der DE 42 05 565 C2 ein elektropneumatischer Druckwandler gleicher Bauart vorgeschlagen, bei dem jedoch an der Ventilplatte Abschnitte unterschiedlicher Elastizität ausgebildet waren. Insbesondere wurde in dem Bereich, der mit dem Anschluss zum Unterdruck zusammenwirkte, eine größere elastische Verformbarkeit und damit eine größere Schalthysterese hergestellt als im Bereich des Anschlusses zum Atmosphärendruck. Hierdurch sollte ein ungewolltes Abheben der Ventilplatte vom zweiten Ventilsitz verhindert werden.

Es hat sich jedoch gezeigt, dass diese Maßnahme nicht den ausreichenden Erfolg gebracht hat und insbesondere im stromlosen Zustand des Elektromagneten weiterhin ein hoher unerwünschter Luftverbrauch vorliegt, wodurch ein Unterdruckerzeuger zur Herstellung des notwendigen Vakuums höher belastet wird, wodurch der Stromverbrauch in der gesamten Verbrennungskraftmaschine und somit der Kraftstoffverbrauch unnötig steigt.

Es ist daher Aufgabe der Erfindung, einen elektropneumatischen Druckwandler zu schaffen, bei dem im unbestromten Zustand der Luftverbrauch durch einfache Maßnahmen bei externer Schwingbeanspruchung zuverlässig reduziert wird.

Diese Aufgabe wird dadurch gelöst, dass in Ruhelage im stromlosen Zustand ein Ventilschließglied auf dem ersten Ventilsitz zwischen dem Steuerdruckraum und dem Unterdruckanschluss aufliegt und einen Abstand zum zweiten Ventilsitz zwischen dem Atmosphärendruckanschluss und dem Steuerraum aufweist. Ein derartiger Versatz der Ventilsitze zueinander reduziert den Luftverbrauch bei entsprechend hoher Dämpfung des elektropneumatischen Wandlers, da keine unerwünschten Öffnungszeiten des Unterdruckanschlusses zum Steuerraum bei Schwingung des Tauchankers entstehen.

In einer hierzu weiterführenden Ausführungsform entspricht der Abstand des Ventilschließgliedes zum zweiten Ventilsitz in Ruhelage im stromlosen Zustand einer maximalen Schwingungsamplitude des Tauchankers.

Eine derartige maximale Schwingungsamplitude kann beispielsweise durch Versuche oder durch genaue Berechnung des insgesamt vorhandenen Schwingsystems festgelegt werden. Das Schwingsystem besteht hierbei aus der Masse des Tauchankers sowie einer unter der Ventilplatte angeordneten Feder, dem Abrollwiderstand der Membran, dem dämpfenden Ölfilm zwischen Tauchanker und Gleitlagerbuchse sowie den zu erwartenden Schwingbelastungen.

Es wird deutlich, dass bei einem derartigen Ventil ein Rückströmen eines unerwünschten Unterdruckes vom Steuerraum zum Atmosphärenanschluss dadurch verhindert wird, dass ohne Bestromung des Elektromagneten kein Unterdruck in den Steuerraum gelangen kann. Somit wird zuverlässig der Luftverbrauch im unbestromten Zustand eines derartigen elektropneumatischen Wandlers minimiert und hierdurch der Kraftstoffverbrauch einer Verbrennungskraftmaschine reduziert.

Ein erfindungsgemäßer elektropneumatischer Druckwandler ist in den Figuren dargestellt und wird nachfolgend beschrieben.
Figur 1 zeigt eine Seitenansicht eines elektropneumatischen Wandlers gemäß dem Stand der Technik in geschnittener Darstellung.
Figur 2a zeigt einen Ausschnitt im Bereich der Ventileinrichtung des elektropneumatischen Druckwandlers nach Figur 1 in geschnittener Darstellung in Ruhelage im unbestromten Zustand.
Figur 2b zeigt den Ausschnitt im Bereich der Ventileinrichtung gemäß Figur 2a bei Schwingbeanspruchung und folgender Tauchankerbewegung in Richtung zum Elektromagneten.
Figur 2c zeigt den Ausschnitt im Bereich der Ventileinrichtung gemäß Figur 2a bei Schwingbeanspruchung und folgender Tauchankerbewegung in zum Elektromagneten entgegen gesetzter Richtung.
Figur 3a zeigt den Ausschnitt im Bereich einer Ventileinrichtung eines erfindungsgemäßen elektropneumatischen Wandlers im unbestromten Zustand in Ruhelage in geschnittener Darstellung.
Figur 3b zeigt den Ausschnitt im Bereich der Ventileinrichtung gemäß der Figur 3a bei Schwingbeanspruchung und folgender Tauchankerbewegung in Richtung zum Elektromagneten.
Figur 3c zeigt den Ausschnitt im Bereich der Ventileinrichtung gemäß der Figur 3a bei Schwingbeanspruchung und folgender Tauchankerbewegung in zum Elektromagneten entgegen gesetzter Richtung.

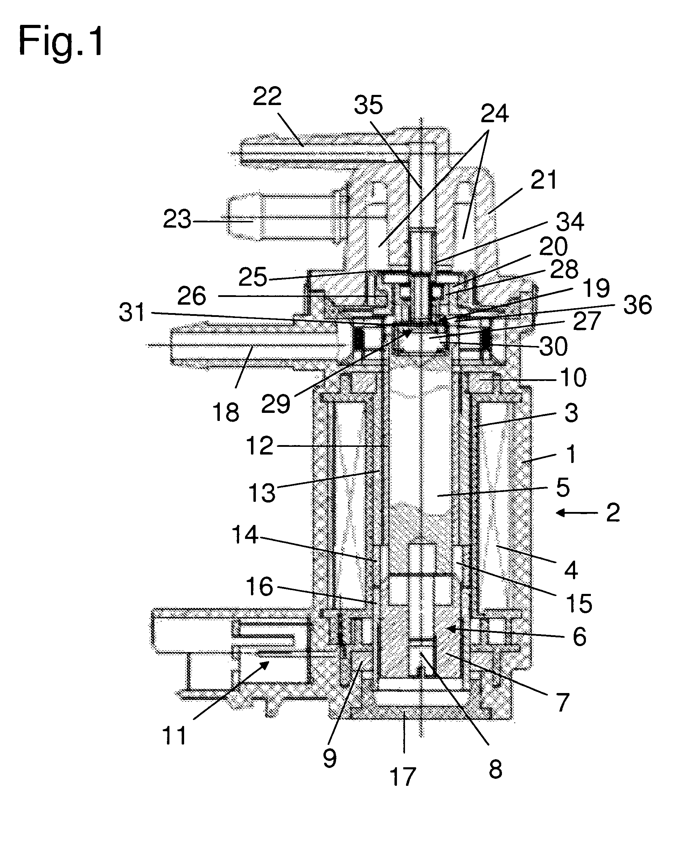

Der in Figur 1 dargestellte elektropneumatische Druckwandler besteht aus einem Gehäuse 1, in dem ein elektromagnetischer Kreis 2 angeordnet ist, der aus einer auf einen Spulenhalter 3 gewickelten Spule 4, einem Tauchanker 5, einem zweiteiligen Kern 6, mit einem ersten äußeren Kernstück 7 und einem zweiten koaxial zum ersten Kernstück 7 innen liegenden zweiten Kernstück 8 sowie einem Rückschlussblech 9 und einem Joch 10 besteht.

Am Gehäuse 1 ist ein Anschlussstecker 11 ausgebildet, über den die elektrische Kontaktierung zur Spule 4 erfolgt. Der Tauchanker 5 ist in einer Gleitlagerbuchse 12 gelagert, welche von einer Metallhülse 13 koaxial umgeben ist. Diese Metallhülse 13 weist eine feste Verbindung zum Joch 10 auf. Axial in Richtung zum Kern 6 schließt sich an die Metallhülse 13 eine Kunststoffhülse 14 an, welche um einen Spalt 15 zwischen Tauchanker 5 und Kern 6 angeordnet ist, in dem bei Bestromen der Spule 4 das magnetische Feld zur Erzeugung der Axialbewegung des Tauchankers 5 erzeugt wird. Axial hieran schließt sich wiederum eine zweite Metallhülse 16 mit Innengewinde an, in die das erste äußere Kernstück 7 des Kerns 6 eingeschraubt wird. Das zweite Kernstück 8 weist zusätzlich zum Außengewinde eine Durchgangsbohrung mit Innengewinde auf, in welche das zweite Kernstück 8 eingedreht ist. Die Metallhülse 16 weist des Weiteren am radialen Außenumfang eine feste Verbindung zum Rückschlussblech 9 auf. Diese Bauteile 4 bis 16 bilden in bekannter Weise den magnetischen Kreis 2.

Die Gewinde am Kern 6 dienen zur Verstellung des Luftspaltes zwischen dem Tauchanker 5 und dem Eisenkern 6 und somit zur Verstellung der magnetischen Kenngröße, wodurch sich die Kraftentstehung im Tauchanker 5 einstellen lässt. Dabei bewirkt eine Verdrehung des ersten äußeren Kernstücks 7 eine relativ hohe Änderung der entstehenden Kraft, während das Eindrehen des zweiten Kernstücks 8 der Feinjustierung dient.

Um die Justierung der Kernstücke 7, 8 vornehmen zu können ist das axiale Ende des Gehäuses 1, in dem der Kern 6 angeordnet ist, offen ausgeführt. Nach Einstellung des gewünschten Spaltes wird das Gehäuse 1 über einen Deckel 17 verschlossen.

Am anderen Ende des Gehäuses 1 ist ein Atmosphärendruckanschluss 18 ausgebildet, der eine fluidische Verbindung zu einer Ventileinrichtung 19 aufweist, die in einem Ankerkopf 20 des Tauchankers 5 angeordnet ist.

An dieser zum Kern 6 entgegengesetzten Seite wird das Gehäuse 1 durch einen Gehäusekopf 21 verschlossen, in dem ein Unterdruckanschluss 22 sowie ein Steuerdruckanschluss 23, der mit einem Steuerdruckraum 24 verbunden ist, ausgebildet sind, welche ebenfalls eine fluidische Verbindung zur Ventileinrichtung 19 aufweisen.

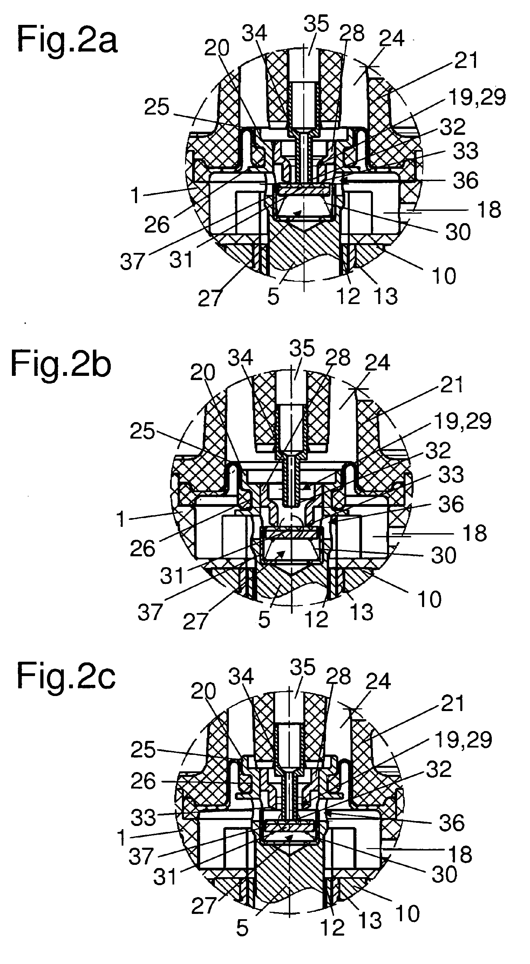

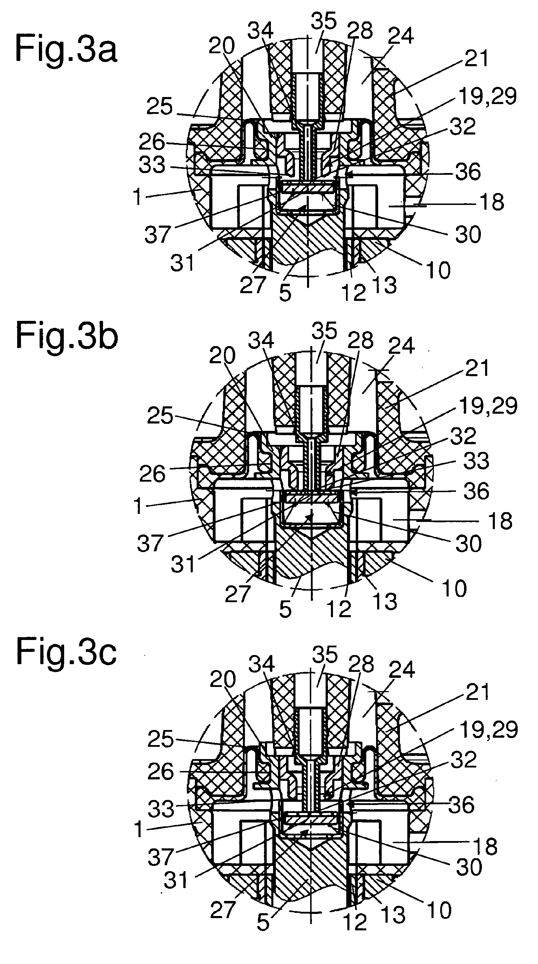

Die Ventileinrichtung 19 ist in den Figuren 2 und 3 als Ausschnitt dargestellt. Es ist zu erkennen, dass zwischen dem Gehäusekopf 21 und dem Gehäuse 1 der radial äußere Rand einer Rollmembran 25 eingeklemmt ist, deren innerer Rand in einer Nut 26 des Ankerkopfes 20 angeordnet ist, der ein axial verlaufendes Sackloch 27 aufweist, in dem eine Hülse 28 eingepresst ist. Diese Hülse 28 weist eine nicht dargestellte Bypassbohrung sehr kleinen Durchmessers oder einen entsprechend kleinen Bypassschlitz auf, über den zur Verringerung der Schalthysterese in den Umkehrpunkten des Tauchankers 5 der Steuerdruckraum 24 mit dem Atmosphärendruckanschluss 18 fluidisch verbunden ist.

Die Ventileinrichtung 19 ist in bekannter Weise als Doppelsitzventil 29 ausgeführt, und weist eine in dem axialen Sackloch 27 angeordnete konische Schraubenfeder 30 auf, die ein Ventilschließglied in Form einer Ventilplatte 31 in Richtung zu zwei koaxialen Ventilsitzen 32, 33 belastet, wobei der erste Ventilsitz 32 an einem Unterdruckrohr 34 ausgebildet ist, welches in einer Unterdruckbohrung 35 im Gehäusekopf 21 eingepresst ist und eine fluidische Verbindung zum Unterdruckanschluss 22 herstellt und der zweite koaxial gelegene Ventilsitz 33 am zum Tauchanker 5 weisenden Ende der eingepressten Hülse 28 ausgebildet ist. Diese Ventilsitze 32, 33 sind insbesondere in den Figuren 2 und 3 zu erkennen. Hier wird zusätzlich deutlich, dass im Sackloch 27 eine Hülse 37 zur Führung der Ventilplatte 31 eingelassen ist, durch die ein Verhaken der Ventilplatte 31 in radialen Durchgangsbohrungen 36, die am Ankerkopf 20 ausgebildet sind und über die der Atmosphärendruckanschluss 18 mit der Ventileinrichtung 19 fluidisch verbunden ist, vermieden wird.

Der elektropneumatische Druckwandler funktioniert nun in der Weise, dass im Steuerdruckraum 24 ein Mischdruck erzeugt wird, der sich aus dem Unterdruck, der über den Unterdruckanschluss 22 in den Steuerdruckraum 24 einleitbar ist sowie dem Atmosphärendruck, der über den Atmosphärendruckanschluss 18 in den Steuerdruckraum 24 einleitbar ist, zusammensetzt. Die Zuströmung dieses Unterdruckes oder Atmosphärendrucks in den Steuerdruckraum 24 wird durch das Doppelsitzventil 29 reguliert.

Die jeweilige Verbindung des Steuerdruckraums 24 ist abhängig von der Anordnung der Ventilplatte 31 und somit von der Position des Tauchankers 5. Entsprechend wird eine Bewegung der Ventilplatte 31 nur durch eine Aktivierung des Elektromagneten, also durch eine Versorgung der Spule 4 mit Strom, eingeleitet. Durch Aktivierung des Elektromagneten wird der Tauchanker 5 in Richtung zum Kern 6 gezogen, wodurch sich die Ventilplatte 31 vom ersten Ventilsitz 32 abhebt, so dass Unterdruck in den Steuerdruckraum 24 strömen kann. Hierdurch entsteht eine auf die Membran 25 und somit den Tauchanker 5 wirkende Kraft in Schließrichtung, da an der entgegengesetzten Seite der Membran 25 Atmosphärendruck anliegt. Durch die resultierende Bewegung des Ankers in entgegengesetzter Richtung wird die Verbindung des Unterdruckanschlusses 22 zum Steuerdruckraum 24 wiederum unterbrochen und gegebenenfalls der Ventilsitz 33 geöffnet, so dass eine Verbindung zum Atmosphärendruckanschluss entsteht und die Kraft auf die Membran wieder fällt. Dieser Vorgang wiederholt sich bis sich im Steuerdruckraum 24 entsprechend der elektromagnetischen Kraft ein Mischdruck einstellt. Es entsteht ein Gleichgewichtszustand, bei welchem die Summe aller am Tauchanker 5 angreifenden Kräfte zu Null werden. Diese Kräfte sind somit die Zugkraft des elektromagnetischen Kreises 2 sowie die an der Membran 25 angreifenden pneumatischen Kräfte.

Der Elektromagnet beziehungsweise die Spule 4 wird dabei mit einer getakteten Gleichspannung in Form eines pulsweitenmodulierten Signals versorgt. Es wird deutlich, dass zu jedem Taktverhältnis des pulsweitenmodulierten Signals ein anderer effektiver Strom erzeugt wird, der in einer Magnetkraft resultiert. Zu jeder auf diese Weise erzeugten Magnetkraft regelt sich wiederum der elektropneumatische Druckwandler auf einen neuen Mischdruck im Steuerdruckraum 24 und damit einen neuen Gleichgewichtszustand ein.

In Figur 2 ist der stromlose Zustand der Ventileinrichtung 19 dargestellt. In dieser Ausführungsform gemäß dem Stand der Technik werden beide Ventilsitze 32, 33 durch die Ventilplatte 31 verschlossen. Dies hat zur Folge, dass bereits bei geringer Bestromung ein Steuerunterdruck aufgebaut werden kann, da die Ventilplatte 31 sich vom Ventilsitz 32 löst während der Steuerdruckraum 24 gegen den Atmosphärendruckanschluss 18 abgedichtet ist.

Folgt jedoch eine externe Schwinganregung in Axialrichtung des elektropneumatischen Wandlers, beispielsweise durch Vibrationen innerhalb eines Kraftfahrzeugs, so entsteht ein unerwünschtes Lösen der Ventilplatte 31 vom Ventilsitz 32 bei Bewegung des Tauchankers 5 in Richtung zum Kern 6, so dass, wie in Figur 2b dargestellt, ein Unterdruck in den Steuerdruckraum 24 einströmen kann. Bei anschließender Ankerbewegung in entgegen gesetzter Richtung setzt sich die Ventilplatte 31 wieder auf den Ventilsitz 32, und löst sich gleichzeitig vom zweiten Ventilsitz 33, so dass eine Verbindung des Steuerdruckraums 24 zur Atmosphäre hergestellt wird. Hierdurch wird der im Steuerdruckraum 24 aufgebaute Unterdruck wieder gegen Atmosphäre abgebaut. Durch die ständige Wiederholung dieses Schwingvorgangs entsteht ein hoher Luftverbrauch.

Zur Lösung dieses Problems wird, wie in Figur 3a dargestellt, erfindungsgemäß vorgeschlagen, dass die Ventileinrichtung 19 in Ruhelage und im unbestromten Zustand so ausgerichtet ist, dass der erste Ventilsitz 32 gegen die Ventilplatte 31 anliegt, während der koaxial dazu angeordnete zweite Ventilsitz 33 von der Ventilplatte 31 beabstandet ist, so dass eine Verbindung zwischen dem Atmosphärendruckanschluss 18 und dem Steuerdruckraum 24 besteht.

Folgt bei einer derartigen Ausführung eine äußere Anregung des Tauchankers 5 durch auftretende Schwingungen, so entsteht bei korrekter Auslegung bei Bewegung des Tauchankers 5 in Richtung zum Kern 6 im Optimalfall kein Ablösen der Ventilplatte 31 vom ersten Ventilsitz 32. Um dies zu erreichen wird der Abstand in der Ruhelage zwischen der Ventilplatte und dem zweiten Ventilsitz 33 so festgelegt, dass bei maximaler Schwingungsamplitude ein Aufsitzen der Ventilplatte 31 auf beiden Ventilsitzen 32, 33 entsteht. Dies ist in Figur 2b dargestellt. Hier befindet sich der Tauchanker 5 in seiner durch äußere Schwingung maximal eingefahrenen Stellung. Somit entsteht im Steuerdruckraum 24 kein Unterdruck, der bei anschließender Ankerbewegung in Richtung des Gehäusekopfes 21 abgebaut werden müsste. Somit entsteht auch kein weiterer Luftverbrauch. Sollten die Schwingungsamplituden größer werden, so wird dennoch eine deutliche Reduzierung des Luftverbrauches erreicht, da die Zeiten und die Anzahl einer unerwünschten Öffnung des ersten Ventilsitzes 32 deutlich verringert werden.

Bei optimaler Auslegung der maximalen Ankerschwindungsamplitude sitzt somit im stromlosen Zustand das Unterdruckrohr 34 immer auf der Ventilplatte 31 auf, wodurch die Unterdruckversorgung immer verschlossen ist und sich steuerdruckseitig kein unerwünschter Druck aufbaut. Zwar wird hierdurch die Funktionskennlinie des elektropneumatischen Wandlers zu Beginn der Bewegung in Richtung eines höheren Tastverhältnisses verschoben, bevor sich ein gewünschter Mischdruck im Steuerdruckraum 24 aufbaut, da durch das Bestromen der Spule 4 und die daraus resultierende Bewegung des Tauchankers 5 erst der Spalt zwischen dem Ventilsitz 33 und der Ventilplatte 31 überwunden werden muss, bis ein Steuerunterdruck generiert werden kann, jedoch bleibt dies im Vergleich zum eingesparten Luftverbrauch unerheblich.

Es wird somit ein elektropneumatischer Wandler geschaffen, der im Vergleich zu bekannten Ausführungsformen einen deutlich verringerten Luftverbrauch aufweist. Selbstverständlich ist es zur Auslegung des Spaltes zwischen dem zweiten Ventilsitz 33 und der Ventilplatte 31 notwendig, die Ruhelage auch abhängig vom Einbau des elektropneumatischen Ventils korrekt festzulegen, da diese abhängig ist von den Reibungswerten des elektropneumatischen Wandlers, dem wirkenden Gewicht des Tauchankers 5 sowie dem Rollwiderstand der Membran 25. Eine Auslegung kann entweder über entsprechende Berechnungen oder aber durch entsprechende Versuche erfolgen.

Es wird deutlich, dass der Aufbau eines derartigen elektropneumatischen Wandlers unterschiedlich ausgeführt werden kann, so kann beispielsweise die Ventilplatte 31 mit der Feder 30 durch einen Faltenbalg ersetzt werden.

Auch ist der Aufbau des elektromagnetischen Kreises 2 sicherlich zu verändern, ohne den Schutzbereich des Hauptanspruchs zu verlassen. Entscheidend ist hier lediglich der Abstand der beiden koaxialen Ventilsitze in axialer Richtung zueinander bei entsprechend ausgelegter Dämpfung des Schwingsystems.

## Patentansprüche

1. Elektropneumatischer Druckwandler mit einer Ventileinrichtung (19), welche ein Doppelsitzventil (29) mit einem ersten Ventilsitz (32) zwischen einem Steuerdruckraum und einem Unterdruckanschluss und einem zweiten Ventilsitz (33) zwischen einem Atmosphärendruckanschluss und dem Steuerdruckraum (24) aufweist, wobei je nach Stellung eines Tauchankers (5) wahlweise eine Verbindung des Steuerdruckraumes 24 zum Atmosphärendruckanschluss (18) oder zum Unterdruckanschluss (22) zur Erzeugung eines Mischdruckes im Steuerdruckraum (24) herstellbar ist, wobei die Stellung des Tauchankers (5) von einer auf den Tauchanker (5) wirkenden elektromagnetischen Kraft eines elektromagnetischen Kreises und einer auf eine mit dem Tauchanker (5) gekoppelten Membran wirkenden pneumatischen Kraft abhängig ist, **dadurch gekennzeichnet, dass** in Ruhelage im stromlosen Zustand ein Ventilschließglied (31) auf dem ersten Ventilsitz (32) zwischen dem Steuerdruckraum (24) und dem Unterdruckanschluss (22) aufliegt und einen Abstand zum zweiten Ventilsitz (33) zwischen dem Atmosphärendruckanschluss (18) und dem Steuerdruckraum (24) aufweist.

2. Elektropneumatischer Druckwandler nach Anspruch 1, **dadurch gekennzeichnet, dass** der Abstand des Ventilschließgliedes (31) zum zweiten Ventilsitz (33) in Ruhelage im stromlosen Zustand einer maximalen Schwingungsamplitude des Tauchankers (5) im stromlosen Zustand entspricht.

## Claims

1. An electropneumatic pressure transducer comprising valve means (19) including a double-seated valve (29) having a first valve seat (32) arranged between a control pressure chamber and an vacuum connector, and a second valve seat (33) arranged between an atmospheric-pressure connector and said control pressure chamber (24), wherein, in dependence on the position of a plunger-type armature (5), the control pressure chamber (24) can be selectively connected to said atmospheric-pressure connector (18) or to said vacuum connector (22) for generating a mixed pressure in the control pressure chamber (24), the position of said plunger-type armature (5) depending on an electromagnetic force, acting on the plunger-type armature (5), of an electromagnetic circuit, and further depending on a pneumatic force acting on a membrane coupled to the plunger-type armature (5), **characterized in that**, in the rest position in the state without current flow, a valve closure member (31) is seated on said first valve seat (32) arranged between the control pressure chamber (24) and the vacuum connector (22), and is located at a distance from said second valve seat (33) arranged between the atmospheric-pressure connector (18) and the control chamber (24).

2. The electropneumatic pressure transducer of claim 1, **characterized in that**, in the rest position in the state without current flow, the distance of said valve closure member (31) from said second valve seat (33) corresponds to a maximum vibration amplitude of the plunger-type armature (5) in the state without current flow.

## Revendications

1. Convertisseur électropneumatique de pression comprenant un moyen de vanne (19) ayant une vanne à double siège (29) avec un premier siège de vanne (32) entre une chambre de pression de commande et un raccord de dépression et un deuxième siège de vanne (33) entre un raccord de pression atmosphérique et ladite chambre de pression de commande (24), il étant possible d'établir sélectivement, en fonction de la position d'un noyau plongeur (5), une connexion entre ladite chambre de pression de commande (24) avec ledit raccord de pression atmosphérique (18) ou ledit raccord de dépression (22) pour générer une pression mixte dans ladite chambre de pression de commande (24), la position dudit noyau plongeur (5) dépendant d'une force électromagnétique d'une circuit électromagnétique agissant sur ledit noyau plongeur (5) et d'une force pneumatique agissant sur une membrane couplée avec ledit noyau plongeur (5), **caractérisé en ce qu'**en position de repos, dans l'état non-alimenté, un élément de fermeture de vanne (31) reste sur ledit premier siège de vanne (32) entre la chambre de pression de commande (24) et ledit raccord de dépression (22) et est écarté du deuxième siège de vanne (33) entre ledit raccord de pression atmosphérique (18) et ladite chambre de pression de commande (24).

2. Convertisseur électropneumatique de pression selon la revendication 1, **caractérisé en ce que** la distance dudit élément de fermeture de vanne (31) audit deuxième siège de vanne (33) correspond, en position de repos et en état non-alimenté, à une amplitude d'oscillation maximale du noyau plongeur (5) en état non-alimenté.
